# EUROPEAN PATENT SPECIFICATION

(11) **EP 1 926 048 B1**
(45) Date of publication and mention of the grant of the patent: **24.02.2010**
(21) Application number: 06024147.8
(22) Date of filing: 21.11.2006
(51) Int. Cl.: G06T 7/00, G06T 11/60

(54) **Presenting video images of a vehicle environment**
Darstellung von Videobildern einer Fahrzeugumgebung
Présentation d'images vidéo d'entourage de véhicule

(43) Date of publication of application: 28.05.2008
(73) Proprietor: Harman Becker Automotive Systems GmbH, 76307 Karlsbad (DE)
(72) Inventor: Mohr, Ulrich, 76131 Karlsruhe (DE); Stiegler, Andreas, 76337 Waldbronn (DE)
(74) Representative: Bertsch, Florian Oliver

(56) References cited:
- US-A- 5 963 148
- E. SEGAWA, M. SHIOHARA, S. SASAKI, N. HASHIGUCHI, T. TAKASHIMA, M. TOHNO: "Preceding Vehicle Detection Using Stereo Images and Non-scanning Millimeter-Wave Radar" IEICE TRANSACTIONS ON INFORMATION AND SYSTEMS, [Online] vol. E89-D, no. 7, July 2006 (2006-07), pages 2101-2108, XP002419216 Retrieved from the Internet: URL:http://ietisy.oxfordjournals.org/cgi/r eprint/E89-D/7/2101> [retrieved on 2007-02-02]
- G. RETSCHER, A. KEALY: "Ubiquitous Positioning Technologies for Modern Intelligent Navigation Systems" THE JOURNAL OF NAVIGATION, [Online] vol. 59, no. 1, January 2006 (2006-01), pages 91-103, XP002419217 Retrieved from the Internet: URL:http://journals.cambridge.org/download .php?file=%2FNAV%2FNAV59_01%2FS03734633050 03504a.pdf&code=6f9f7a7ee0c5de6fa69d566e33 aeaf5e> [retrieved on 2007-02-07]

## Description

This invention relates to a method of presenting video images from a vehicle environment and to a system therefor. The invention especially relates to driver assist systems in which an image sensor provided in the vehicle continuously takes images from the vehicle environment.

### Related Art

In the art, vehicle-based navigation systems are known which guide the driver of the vehicle from the present location to a predetermined destination, the navigation system outputting driving indications either visually by indicating the driving direction on a display or orally by a voice output indicating the next driving maneuver.

Additionally, systems are shown which are used in connection with driver assist systems in which artificial elements like speed limits or distance markers are introduced into the video images captured by a video camera. These elements are shown floating on the video image. The introduced elements are not or only loosely coupled to the real situation.

These artificially introduced elements such as speed limits in an area where the speed limit applies can help the driver during navigation when he or she is able to understand the abstraction generated by introducing an artificial element into a video image of the vehicle environment. The driver has to be used to this abstract visualization of data. However, in these examples the displayed images differ from what the driver actually sees in front of the vehicle.

In a vehicle additionally many different sensors are provided, these sensors detecting either a physical value of the vehicle environment outside the vehicle or any other physical values of the vehicle such as the vehicle speed.

E. Segawa et al. disclose in "Preceding Vehicle Detection Using Stereo Images and Non-Scanning Millimeter-Wave Radar" in IEICE Transaction Information and Systems, Vol. E89/-D, No. 7, July 2006, p. 2101-2108, a system allowing the detecting of the preceding vehicle using a stereo camera and a wave radar. A lane detection is carried out on which the vehicle is moving by post-processing the video images. After the lane detection the objects in the lane are determined and the relative distance to the detecting vehicle is determined using the radar.

In some situations it might be helpful to visualize the physical values detected by the sensors in the video image in such a way that the driver can recognize the situation faster and more easily.

### Summary of the Invention

Accordingly, a need exists to provide a method and a system enabling the driver to easily recognize the information provided by a vehicle sensor that the front vehicle is driving much slower than the detecting vehicle.

This need is met by the features of the independent claims. In the dependent claims preferred embodiments of the invention are described.

According to a first aspect of the invention a method is provided for presenting video images from a vehicle environment to the driver, the method comprising the step of taking video images from the video environment. Additionally, sensor data of the vehicle environment or of the vehicle itself are detected and these sensor data are processed. Furthermore, objects in the video images are recognized by post-processing the video images. The processed sensor data can then be visualized in the displayed video images by changing the representation of recognized objects in the displayed video images. By changing the representation of objects which are actually present in the video images, the result of the processing of the sensor data can be displayed to the driver in an intuitive way. According to the invention it is possible to augment the video image of the real traffic situations with artificial, but native elements of the objects for which the representation is changed. On the one hand this can mean that the way the representation is changed could be in fact present in the given situation. On the other hand this could mean that the object shown in the video images is represented in another way in view of the received sensor data.

According to the invention the step of recognizing objects in the video images comprises the step of recognizing vehicles in the video images. In addition to the detection of vehicles the post-processing of the video images can have the goal to detect any other objects which could be hazardous to the vehicle or for which a higher attention of the driver is necessary.

According to one embodiment of the invention a sensor determines the distance of objects shown in the images relative to the detecting vehicle from where the distance is determined. According to the invention the velocity of the vehicles moving in front of the detecting vehicle is determined. When it is detected that the vehicle moving in front of the detecting vehicle has a velocity relative to the detecting vehicle which is larger than a predetermined threshold velocity meaning that the detecting vehicle approaches the front vehicle, the vehicle in front which is also shown in the video images can be displayed on the video images in such a way that the braking lights of the front vehicles are shown in an activated state. In this situation the driver can recognize very easily that attention has to be paid to the vehicle in front, as the relative distance to the detecting vehicle may rapidly become smaller. As can be seen from this example, the information provided by the sensor data that the vehicle driving in front is much slower can be visualized by changing the representation of native elements actually provided in the video images. The braking lights in their activated state could be actually in the scene, but at present they are not activated, the front vehicle is simply driving slower than the detecting vehicle. This information can be displayed to the user.

A similar situation can occur when a vehicle approaches a traffic jam. In this situation a distance sensor provided in the vehicle may recognize that the relative distance to the vehicle is getting smaller and smaller. The system of the invention can then react in such a way that the warning lights of the vehicle as shown in the video images can be displayed in an activated stated even if this vehicle actually has its warning lights off. In this situation the driver can also understand the very comprehensive way that a reaction and an adaption of the driving attitudes may be necessary.

In order to do so, objects present in the video images and visible to the driver are detected and interpreted by post-processing the video images and are classified in object classes. The video images taken at a frame rate of about 20 to 100 frames per second are processed and pattern recognition techniques are applied to the images in order to detect objects such as other vehicles or persons or any other element present in the environment of a vehicle. When an object is detected in the video images by using post-processing techniques such as edge detection, the shape of the detected object is determined, and the object can be classified in different object classes. By way of example different classes may exist for vehicles, buildings, motorcycles, pedestrians, trees, etc. By comparing the shape detected in the images to predefined shapes, the object in the image can be recognized.

Additionally, the detected sensor data can be processed and the result of this sensor data processing can be shown in the image by changing the representation of a recognized object by introducing an element in an object in the displayed video images, which is actually not present in the video images as detected by the image sensor, but which could be there in another traffic situation.

In traffic assist systems the video images are normally taken from the vehicle environment in front of the vehicle as visible to the driver when looking through the front window. Accordingly, the video images may monitor the vehicle environment in front of the vehicle. However, it is also possible that the invention is used together with video images taken from the rear of the vehicle, e.g. in cases where video images are used in park assist systems.

In another embodiment the temperature outside the vehicle is detected together with the moisture level. When it is now detected that the temperature is lower than a predetermined threshold temperature and when the moisture level is larger than a predetermined threshold moisture, it can be deduced that the possibility of a slippery road exists. In this example the representation of the road in the video images can be changed accordingly by changing the representation of the road in such a way that the possible danger is recognized by the driver. By way of example reflections as occurring on ice can be added to the road representation to indicate to the driver that the danger of icy roads exists.

In another embodiment of the invention the sensor data detecting the outside visibility are processed and when the visibility is lower than a predetermined threshold visibility and when the distance to the vehicle in front is larger than a predetermined distance, the representation of the vehicle in front of the detecting vehicle can be changed. In foggy situations distance sensors such as radars or infrared sensors can detect objects at greater distances and in situations in which the driver may not clearly recognize the vehicle in front. Using the additional distance sensors in the vehicle the video images can be augmented with an image of the vehicle at the actual position. Accordingly, the vehicle is better visible than in reality.

In another situation sensor data from a position determination unit may be used in order to determine the actual position of the vehicle on map data provided in the vehicle. When the position in the map data is known, any objects visible in the image but which are also comprised in the map data can be emphasized. By way of example the speed sensor may indicate that the vehicle is driving at a high velocity. The position determination unit may determine that the vehicle is approaching a railroad crossing or a crosswalk. In both situations the actual vehicle velocity may not be adapted to the upcoming objects such as the crosswalk or the railroads crossing. In these examples the representation of the crosswalk itself or the representation of the Belisha Beacon can be changed. In the same way a flashing light can be added to the railroad crossing, even if the light is actually not flashing.

The invention further relates to a system for displaying video images from the vehicle environment, the system comprising an image sensor taking video images from the vehicle environment. Additionally, at least one sensor is provided detecting data of the vehicle environment or of the vehicle itself. A sensor processing unit processes the sensor data and a video image processing unit post-processes the video images and recognizes objects in video images. A graphics unit is provided visualizing the processed sensor data in the displayed video images by changing the representation of the recognized objects in the displayed video images.

The information from the sensor is displayed to the driver. The information can come from a distance sensor detecting the distance to other objects in front of the vehicle, a velocity sensor detecting the velocity of vehicles driving in front of the detecting vehicle, another velocity sensor detecting the velocity of the detecting vehicle itself, a temperature sensor measuring the outside temperature, a moisture level detecting sensor, or a position detecting sensor. The position detecting sensor can be part of a navigation system comprising digital map data, the navigation unit being able to guide the driver to a desired destination. When the present vehicle position is known, possible dangerous objects can also be detected by comparing the position to the environment on the map and to change the representation of an object in the video image based on information from the navigation unit.

Preferably the system works as described above.

### Brief Description of the Drawings

In the following the invention will be described in more detail with reference to the accompanying drawings, in which
Fig. 1 shows a schematic view of a system for displaying video images in which a sensor information is visualized by changing the representation of objects in the displayed video images,
Fig. 2 shows a flowchart comprising the main steps of carrying out a method for displaying the video images with the sensor information,
Fig. 3 shows one example of a video image in which a distance or velocity information is represented in the video image,
Fig. 4 shows another example of the representation of sensor data in the video images,
Fig. 5 shows another example of a video image in which the information of a temperature sensor is displayed, and
Fig. 6 shows another example visualizing the information of a navigation unit in the video images.

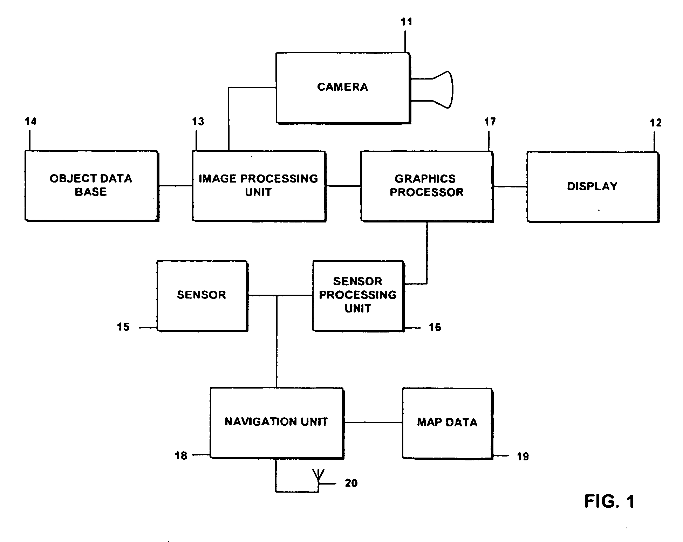

In Fig. 1 a system is shown which can be used for visualizing sensor information in a video image presented to the driver. The system shown in Fig. 1 comprises a camera 11 taking images from the environment of the vehicle. The camera can be part of a travel assist system in which the images from the camera are displayed to the driver on a display 12. The camera is installed in a vehicle (not shown). It can be positioned either behind the windscreen supervising the part situated in front of the vehicle. Furthermore, it is possible to install the camera in the front part of the vehicle, e.g. next to the radiator grill. The camera may be a CCD camera or CMOS camera taking images at a frame rate between 25 and 100 frames (images per second). These frame rates are necessary in order to be sure to grasp the scenery early enough when the vehicle is driving at high speed. The camera provides a two-dimensional representation of the vehicle environment in front of the vehicle. It should be understood that it is also possible to locate the camera in such a way that the rear part of the vehicle is supervised when the vehicle is driving in the rearward direction. Furthermore, two cameras may be provided, one camera monitoring the front part, another camera monitoring the back of the vehicle. An image processing unit 13 is provided connected to the camera receiving the video images from the camera. The image processing unit post-processes the received images in order to locate objects in the video images, e.g. by applying filters to the received image data. By way of example the object detection can be carried out by using edge detection filters, these edge detection filters detecting intensity differences in neighboring pixels of the images. When the contour of an object was found, this contour can be compared to different predetermined contours stored in an object data base 14. By way of example when the vehicle comprising the camera, which is called detecting vehicle hereinafter, drives behind another vehicle, this other vehicle in front of the detecting vehicle can be detected by the image processing unit. The detected contours are then compared to the object data base and by that comparison the contour can be identified as being a vehicle. This identification of the objects in the video images is necessary for the visualization of the sensor data as will be explained in detail below.

The system of the invention furthermore comprises a sensor detecting sensor data from either outside the vehicle, i.e. from the vehicle environment or detecting sensor data from the vehicle itself. It should be understood that in a vehicle several sensors 15 may be provided, but for the sake of clarity only one sensor is indicated in the embodiment shown in Fig. 1. This sensor can provide information about the actual speed of the detecting vehicle, additionally a distance sensor may be provided, the distance sensor measuring the distance to the vehicles or other objects in front of the detecting vehicle taking into account the driving direction of the detecting vehicle. The sensor data are transmitted to a sensor processing unit processing the sensor data. The processed sensor data such as the actual vehicle speed of the detecting vehicle, the distance of the vehicle driving in front of the detecting vehicle or the velocity of the vehicle in front are then transmitted to a processing unit 17 which also is responsible for processing the graphics and to prepare the image data to be displayed on the display 12. Accordingly, in the embodiment shown in Fig. 1 the processing unit is entitled as being the graphics processor. The system may furthermore comprise a navigation unit 18 capable of informing a user of how to reach a predetermined destination. The navigation unit calculates the fastest or shortest routes from the present location to a predetermined destination based on the map data 19 provided in the navigation system. Additionally, an antenna 20 can be provided, the antenna receiving signals from a satellite system, the navigation unit being able to determine the present vehicle position based on the signals received from the antenna 20.

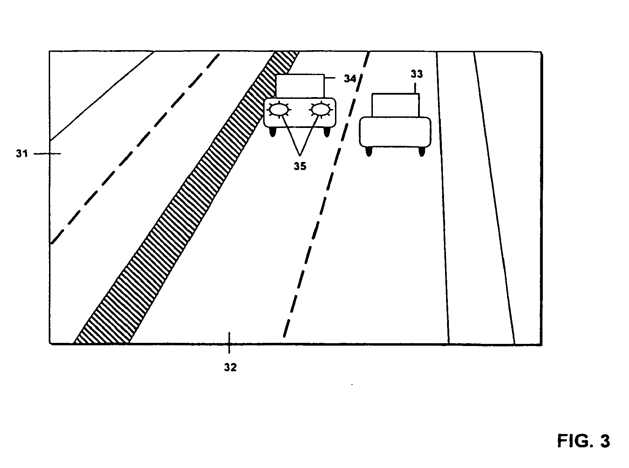

The information of the sensor 15 can be presented to the driver in different ways. In case the sensor is a distance measuring sensor measuring the distance to the objects in front of the detecting vehicle, this distance may be indicated to the driver by simply displaying a distance value. However, this abstract figure may not be useful to the driver, as the driver may not know how to react on the presented figures. According to the invention it is now possible to visualize the information received from the sensor data in the displayed video images. This can be done by introducing additional elements to objects already present in the scenery that are not actually in the scene, but which could be there. Different examples of the visualization of the processed sensor data are given in connection with Figs. 3-6.

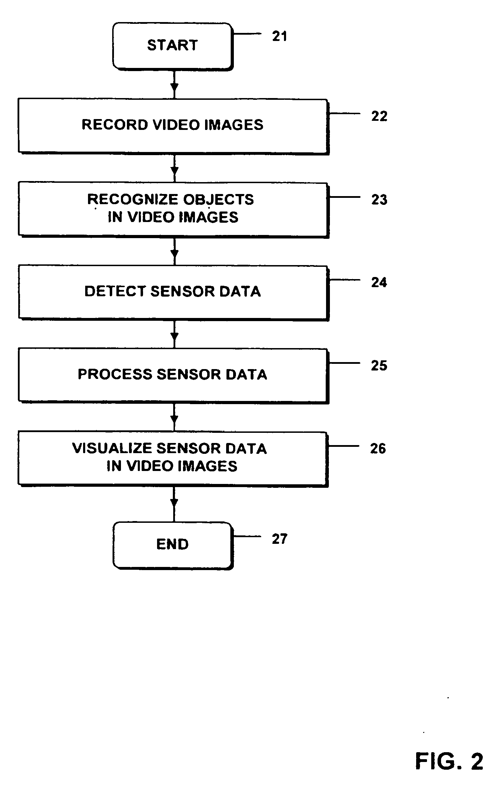

Next, the different steps needed to visualize the sensor data in the video images are summarized in connection with Fig. 2. The method starts in step 21 and the video images are recorded in step 22. The recorded video images are then further processed in order to recognize objects shown in the video images. These objects can be other vehicles, pedestrians, buildings, trees, signs, etc. The image processing unit then has to recognize the different objects in order to know later on for which of the objects the representation has to be changed for visualizing the sensor information (step 23).

In step 24 the sensor data are detected, and in step 25 the detected sensor data are processed in order to retrieve the information which should be indicated to the driver. In the next step 26 the information received from the sensor data is visualized in the video images by changing the representation of objects which were detected in the video images so that the driver is informed in a very natural way of the information provided by the sensor. To this end the sensor information has to be translated into an image. It has to be determined for which of the objects in the image the representation has to be changed. Furthermore, it has to be decided in which way the representation is changed. The method ends in step 27.

In connection with Fig. 3 a first embodiment of the invention is explained in more detail. Fig. 3 shows one image of the camera of the detecting vehicle when the detecting vehicle is driving on a highway 31 having two lanes for each direction. By way of example the detecting vehicle may drive on the left lane 32, one vehicle 33 driving on the right lane, another vehicle 34 driving on the left lane. These two vehicles are also visible in the video images taken by the camera 11. When the video images are processed for detecting any object in the images, the contours of the vehicle 33 and 34 may be detected by the image processing unit 13. By comparing the detected shape with different reference shapes stored in the database 14, the image processing unit can classify the two detected objects as vehicles. Additionally, the sensor 15 may be a distance sensor measuring the distance to the two vehicles driving in front. It should be understood that the information of the distance can also be retrieved by processing the video images. When it is detected that the two objects 34 and 33 get larger in the video images very fast, it can be followed that the distance to these two vehicles is getting smaller. Furthermore, the camera 11 and the sensor 15 may be incorporated into one 3D imaging system, the 3D imaging system providing in addition to the image a depth information. When the sensor now detects that the vehicle 34 is much slower and the distance to this vehicle is getting lower and lower, the graphics processor can react on the information received from the sensor 15 in such a way by introducing new elements into the image. By way of example the graphical representation of the vehicle can be changed by adding artificial brake lights 35 to the displayed image. When the image processing unit has classified object 34 as a vehicle, the system can be configured in such a way that the brake lights are added at a predetermined position of the geometrical shape of the vehicle, even if the lights were not actually detected in the video images of the vehicle. When the brake lights are shown in an activated state, the driver of the vehicle may have the impression that vehicle 35 activates the brake. Accordingly, the driver will pay more attention to the decreasing distance as it was detected by the distance sensor 15. The above-mentioned example shows that by introducing elements into the scene which were not present in the video images, but which could be there, the driver can be informed of a sensor information without the need of abstraction. The driver can easily understand the information provided by the sensor.

In connection with Fig. 3 another embodiment of the invention can be explained. In another embodiment it may happen that the two vehicles 33 and 34 are the last two vehicles of a traffic congestion, the vehicles 33 and 34 moving very slowly or the vehicles 33 and 34 not moving at all. The sensor 15 detecting the distance or the velocity of the two vehicles driving ahead now detects that these two vehicles are actually not moving anymore and that the detecting vehicle is moving at a relatively high speed. In order to show to the driver that a hazardous situation may occur, the representation of the two vehicles 33 and 34 in the video images can be changed in such a way that the two warning lights 35 can be shown in a flashing state in order to signal that these two vehicles are part of the rear end of a traffic congestion. Even if the drivers of the two vehicles have not activated their warning lights, the driver of the detecting vehicle is informed in way easy to understand. Accordingly, the driver can react the way necessary to avoid a crash with the two vehicles 33 and 34 by actually actuating the brake. In addition to the information received from a distance sensor 15 the information of a traffic congestion may also be received from the navigation system. In the art systems such as the TMC messages (Traffic Message Channel) are known which are received encoded in the radio signal of a radio station. This traffic news comprise the information on which part of a highway the traffic is congested. By comparing the actual vehicle position as determined in the navigation unit to the traffic news, it can be deduced that a traffic congestion may come up. This navigation-based information can either be used instead or in combination with distance sensors or velocity measuring sensors. The decision whether to activate the warning lights may also depend on the fact whether the vehicle is driving on a highway or not.

In an urban agglomeration the detection of non-moving vehicles on the same lane as the detecting vehicle can be considered as being normal, e.g. when vehicles are waiting at a traffic light. On highways, however, the detection of non-moving vehicles on one of the lanes can be considered as being dangerous. Thus, only when the navigation system indicates that the vehicle is driving on a highway, the flashing lights are added to the non-moving vehicle.

In this case the representation of the recognized object in the image is changed depending on signals received from two different sensors, the position determination sensor and the velocity or distance sensor.

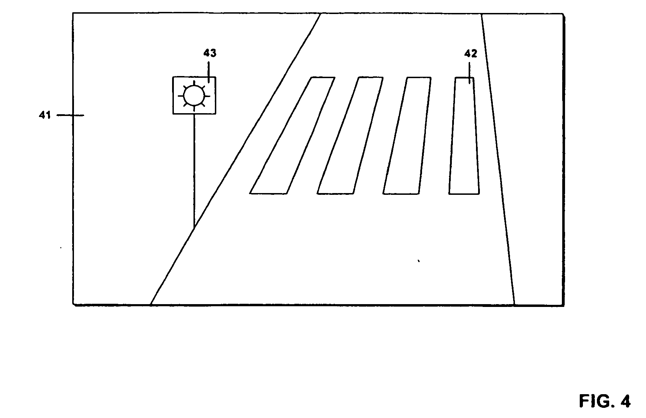

In connection with Fig. 4 another embodiment is disclosed. In Fig. 4 another video image 41 as recorded by the camera 11 is shown. In this example the detecting vehicle is driving on a road and is approaching a crosswalk 42. The system may now determine the actual vehicle speed of the detecting vehicle and the information may be received from the navigation unit 18 that the vehicle is approaching the shown crosswalk 42. When it is now detected that the vehicle is driving at a speed far to high for a situation in which the vehicle will approach the crosswalk, the video images could be altered in such a way that a warning light which is normally present at crosswalks, also know as Belisha Beacon is activated. By activating the flashing lights 43 the driver can be informed that it may be advisable to lower the speed of the vehicle when the vehicle is approaching the crosswalk. Furthermore, it is possible to change the representation of the crosswalk itself, by way of example by changing the color of the displayed crosswalk. In this embodiment the representation of an object itself is changed.

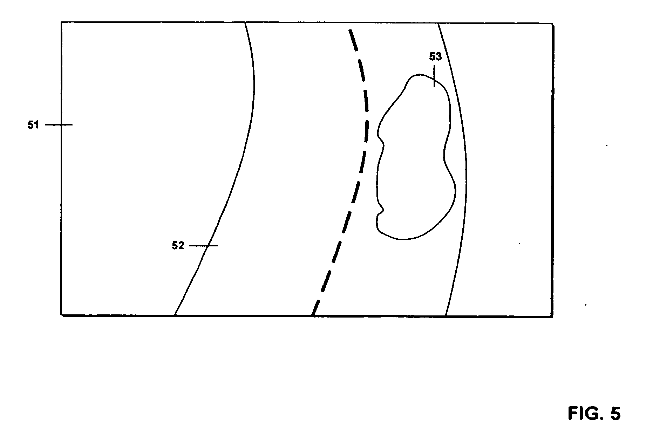

Another embodiment is explained in connection with Fig. 5. In Fig. 5 another video image 51 as taken by the camera 11 is shown. The example shown in Fig. 5 can help the driver to recognize that the outside weather conditions are such that the risk of an icy road exists. By way of example a temperature sensor may measure the outside temperature. If the outside temperature is close or below 0°C and an additional sensor measures the moisture level, the sensor processing unit 16 will process the sensor data and determine whether the moisture level is higher than a predetermined moisture threshold value. If this is the case and the temperature is lower than a predetermined threshold temperature, it may be advantageous to indicate to the driver that the road may be slippery. In order to inform the driver of the weather conditions, the shown video images could be changed in such a way that in the images the road 52 is indicated to have reflections 53 like on ice. When reflections 53 like on ice are shown on the road, these reflections can indicate to the driver that a danger of an icy road may exist.

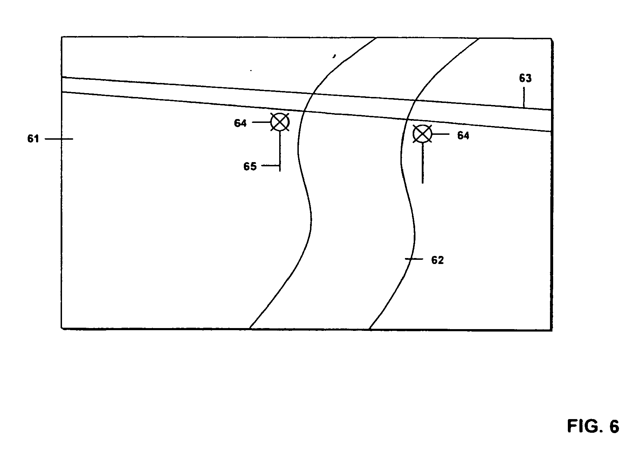

In Fig. 6 another embodiment of the invention is disclosed. Fig. 6 shows again an image 61 as taken by the camera 11. In the embodiment of Fig. 6 the vehicle is driving along the road 62 which is crossed by a railway 63. The system may now detect the vehicle speed of the detecting vehicle, and the map data of the navigation unit may indicate that the crossing of the railway is coming up ahead. When it is now detected that the vehicle speed is much too high and as the possibility may exist that the crossing is closed when a train is approaching, the driver can be informed of this possible danger and the exaggerated velocity by introducing flashing lights 64 into the sign 65 indicating the crossing of the railroad. Through the flashing lights 64 the driver is informed that the actual vehicle speed may not be appropriate in view of the crossing railroad.

The above-mentioned examples show some embodiments on how a sensor information can be visualized in such a way that the driver can easily understand the information provided by the sensor. According to the invention this visualization is obtained by introducing elements in the displayed video images which are not actually present in the video images, but which could be there in another situation. Using these native elements to augment the scene releases the driver from unnecessary abstraction, the driver can recognize the situation much faster.

## Claims

1. Method of presenting video images from a vehicle environment comprising the following steps:
- taking video images of the vehicle environment (22),
- recognising objects in the video images (23), wherein the step of recognizing objects comprises the step of recognizing vehicles in the video images,
- detecting sensor data (24) of the vehicle environment comprising the step of determining the velocity of vehicles in front of the detecting vehicle,
- processing the sensor data (25),
- visualizing the processed sensor data in the displayed video images (26) by changing the representation of recognised objects in the displayed video images, wherein, when it is detected that the velocity of the vehicle moving in front of the detecting vehicle has a velocity relative to the detecting vehicle which is lower than a predetermined threshold velocity, the braking lights of the front vehicle are shown in an activated state.

2. Method of presenting video images from a vehicle environment comprising the following steps:
- taking video images of the vehicle environment (22),
- recognising objects in the video images (23), wherein the step of recognizing objects comprises the step of recognizing vehicles in the video images,
- detecting sensor data (24) of the vehicle environment comprising the step of determining the velocity of vehicles in front of the detecting vehicle,
- processing the sensor data (25),
- visualizing the processed sensor data in the displayed video images (26) by changing the representation of recognised objects in the displayed video images, wherein the representation of a vehicle in front of the detecting vehicle is changed by adding flashing warning lights to a vehicle, for which the absolute velocity is lower than a predetermined threshold velocity.

3. Method according to claim 1 or 2, **characterized in that** objects present in the video images and also visible to the driver through the windscreen are detected and interpreted by post processing the video images and are classified in object classes.

4. Method according to any of the preceding claims, **characterized in that** the representation of the recognized objects is changed by introducing an element in an object in the displayed video images, which is actually not present in the video images, but which could be in the video images in another driving situation.

5. Method according to any of the preceding claims, wherein the video mages are taken from the vehicle environment in front of the vehicle.

6. Method according to any of the preceding claims, wherein the step of detecting sensor data comprises the step of detecting the outside temperature and the outside moisture level, wherein, when the outside temperature is lower than a predetermined threshold temperature and when the moisture is larger than a predetermined threshold moisture, the representation of the road in the video images is changed in such a way that the possible danger is recognized by the driver by changing the representation of the road by adding reflections like on ice.

7. Method according to any of the preceding claims, wherein the step of detecting sensor data comprises the step of determining the outside visibility, and when the visibility is lower than a predetermined threshold visibility and when the distance to the vehicle in front is larger than a predetermined distance, the representation of the vehicle in front of the detecting vehicle is changed in such a way that it is better visible in the images than in reality by augmenting the video images with an image of the vehicle at the actual position.

8. Method according claim 1, wherein the representation of a vehicle in front of the detecting vehicle is changed by adding flashing warning lights to a vehicle, for which the absolute velocity is lower than a predetermined threshold velocity.

9. Method according to any of the preceding claims, wherein the step for detecting sensor data of the vehicle comprises the step of determining the position of the vehicle and to locate the vehicle in a digital map and to emphasise objects in the video images depending on information from the map data, wherein object information is retrieved from the map data, and to emphasize objects in the video images depending on the received sensor data.

10. System for displaying video images from a vehicle environment, comprising:
- an image sensor (11) for taking video images from the environment of the vehicle,
- at least one sensor (15) for detecting data of the vehicle environment of the vehicle determining the velocity of vehicles in front of the detecting vehicle,
- a sensor processing unit (16) for processing the sensor data,
- a image processing unit (13) for post-processing the video images and recognizing vehicles in the video images, and
- a graphics processing unit (17) for visualizing the processed sensor data in the displayed video images by changing the representation of the detected vehicles in the displayed video images, wherein, when it is detected that the velocity of the vehicle moving in front of the detecting vehicle has a velocity relative to the detecting vehicle which is lower than a predetermined threshold velocity, the braking lights of the front vehicle are shown in an activated state.

11. System for displaying video images from a vehicle environment, comprising:
- an image sensor (11) for taking video images from the environment of the vehicle,
- at least one sensor (15) for detecting data of the vehicle environment of the vehicle determining the velocity of vehicles in front of the detecting vehicle,
- a sensor processing unit (16) for processing the sensor data,
- a image processing unit (13) for post-processing the video images and recognizing vehicles in the video images, and
- a graphics processing unit (17) for visualizing the processed sensor data in the displayed video images by changing the representation of the detected vehicles in the displayed video images, wherein the representation of a vehicle in front of the detecting vehicle is changed by adding flashing warning lights to a vehicle, for which the absolute velocity is lower than a predetermined threshold velocity.

12. System according to claim 10 or 11, wherein the sensor (15) detecting data of the vehicle environment comprises at least one of the following sensors: a distance sensor, a sensor detecting the velocity of vehicles driving in front of the vehicle, a temperature sensor, a moisture level detecting sensor, a position detecting sensor.

13. System according to any of claims 10 to 12, wherein the image processing unit (13) is adapted to recognize vehicles in the video images by applying edge detection filters to the video images and comparing the detected objects to predetermined types of objects stored in a data base (14).

## Patentansprüche

1. Verfahren zum Darstellen von Videobildern von einer Fahrzeugumgebung, umfassend die folgenden Schritte:
- Aufnehmen von Videobildern von der Fahrzeugumgebung (22),
- Erkennen von Objekten in den Videobildern (23), wobei der Schritt des Erkennens von Objekten den Schritt eines Erkennens von Fahrzeugen in den Videobildern umfasst,
- Erfassen von Sensordaten (24) der Fahrzeugumgebung, welches den Schritt eines Bestimmens der Geschwindigkeit von Fahrzeugen vor dem erfassenden Fahrzeug umfasst,
- Verarbeiten der Sensordaten (25),
- Veranschaulichen der verarbeiteten Sensordaten in den angezeigten Videobildern (26) durch Ändern der Darstellung von erkannten Objekten in den angezeigten Videobildern, wobei, wenn erfasst wurde, dass die Geschwindigkeit des Fahrzeugs, welches sich vor dem erfassenden Fahrzeug bewegt, eine Geschwindigkeit bezogen auf das erfassende Fahrzeug aufweist, welche geringer als eine vorbestimmte Schwellenwertgeschwindigkeit ist, die Bremslichter des Vorderfahrzeugs in einem aktivierten Zustand gezeigt werden.

2. Verfahren zum Darstellen von Videobildern von einer Fahrzeugumgebung, umfassend die folgenden Schritte:
- Aufnehmen von Videobildern von der Fahrzeugumgebung (22),
- Erkennen von Objekten in den Videobildern (23), wobei der Schritt des Erkennens von Objekten den Schritt eines Erkennens von Fahrzeugen in den Videobildern umfasst,
- Erfassen von Sensordaten (24) der Fahrzeugumgebung, welches den Schritt eines Bestimmens der Geschwindigkeit von Fahrzeugen vor dem erfassenden Fahrzeug umfasst,
- Verarbeiten der Sensordaten (25),
- Veranschaulichen der verarbeiteten Sensordaten in den angezeigten Videobildern (26) durch Ändern der Darstellung von erkannten Objekten in den angezeigten Videobildern, wobei die Darstellung eines Fahrzeugs vor dem erfassenden Fahrzeug geändert wird, indem blinkende Warnlichter einem Fahrzeug hinzugefügt werden, dessen absolute Geschwindigkeit geringer als eine vorbestimmte Schwellenwertgeschwindigkeit ist.

3. Verfahren nach Anspruch 1 oder 2, **dadurch gekennzeichnet, dass** Objekte, welche in den Videobildern vorhanden sind und ferner für den Fahrer durch die Windschutzscheibe sichtbar sind, durch eine Nachverarbeitung der Videobilder erfasst und interpretiert werden und in Objektklassen klassifiziert werden.

4. Verfahren nach einem der vorhergehenden Ansprüche, **dadurch gekennzeichnet, dass** die Darstellung der erkannten Objekte geändert wird, indem ein Element in ein Objekt in den dargestellten Videobildern eingebracht wird, welches tatsächlich nicht in den Videobildern vorhanden ist, welches jedoch in den Videobildern in einer anderen Fahrsituation vorhanden sein könnte.

5. Verfahren nach einem der vorhergehenden Ansprüche, wobei die Videobilder aus der Fahrzeugumgebung vor dem Fahrzeug aufgenommen werden.

6. Verfahren nach einem der vorhergehenden Ansprüche, wobei der Schritt des Erfassens von Sensordaten den Schritt eines Erfassens der Außentemperatur und des Außenfeuchtigkeitspegels umfasst, wobei, wenn die Außentemperatur kleiner als eine vorbestimmte Schwellenwerttemperatur ist und wenn die Feuchtigkeit größer als eine vorbestimmte Schwellenwertfeuchtigkeit ist, die Darstellung der Straße in den Videobildern in einer derartigen Art und Weise geändert wird, dass die mögliche Gefahr von dem Fahrer erkannt wird, indem die Darstellung der Straße durch Hinzufügen von Reflektionen wie auf Eis geändert wird.

7. Verfahren nach einem der vorhergehenden Ansprüche, wobei der Schritt des Erfassens von Sensordaten den Schritt eines Bestimmens der Außensichtweite umfasst, und wobei, wenn die Sichtweite geringer als eine vorbestimmte Schwellenwertsichtweite ist und wenn der Abstand zu dem Vorderfahrzeug größer als ein vorbestimmter Abstand ist, die Darstellung des Fahrzeugs vor dem erfassenden Fahrzeug in einer derartigen Art und Weise geändert wird, dass es in den Bildern besser sichtbar ist als in Wirklichkeit, indem die Videobilder mit einem Bild des Fahrzeugs an der tatsächlichen Position erweitert werden.

8. Verfahren nach Anspruch 1, wobei die Darstellung eines Fahrzeugs vor dem erfassenden Fahrzeug geändert wird, indem einem Fahrzeug, dessen absolute Geschwindigkeit geringer als eine vorbestimmte Schwellenwertgeschwindigkeit ist, blinkende Warnlichter hinzugefügt werden.

9. Verfahren nach einem der vorhergehenden Ansprüche, wobei der Schritt zum Erfassen von Sensordaten des Fahrzeugs den Schritt eines Bestimmens der Position des Fahrzeugs umfasst, um das Fahrzeug in einer digitalen Landkarte zu lokalisieren und Objekte in den Videobildern in Abhängigkeit von einer Information von den Kartendaten hervorzuheben, wobei eine Objektinformation von den Kartendaten abgefragt wird, und um Objekte in den Videobildern in Abhängigkeit der empfangenen Sensordaten hervorzuheben.

10. System zum Anzeigen von Videobildern von einer Fahrzeugumgebung, umfassend:
- einen Bildsensor (11) zum Aufnehmen von Videobildern von der Umgebung des Fahrzeugs,
- mindestens einen Sensor (15) zum Erfassen von Daten der Fahrzeugumgebung des Fahrzeugs, welcher die Geschwindigkeit von Fahrzeugen vor dem erfassenden Fahrzeug bestimmt,
- eine Sensorverarbeitungseinheit (16) zum Verarbeiten der Sensordaten,
- eine Bildverarbeitungseinheit (13) für eine Nachverarbeitung der Videobilder und für ein Erkennen von Fahrzeugen in den Videobildern, und
- eine Graphikverarbeitungseinheit (17) für ein Veranschaulichen der verarbeiteten Sensordaten in den angezeigten Videobildern, indem die Darstellung der erfassten Fahrzeuge in den angezeigten Videobildern geändert wird, wobei, wenn erfasst wird, dass die Geschwindigkeit des Fahrzeugs, welches sich vor dem erfassenden Fahrzeug bewegt, eine Geschwindigkeit bezogen auf das erfassende Fahrzeug aufweist, welche geringer als eine vorbestimmte Schwellenwertgeschwindigkeit ist, die Bremslichter des Vorderfahrzeugs in einem aktivierten Zustand gezeigt werden.

11. System zum Anzeigen von Videobildern von einer Fahrzeugumgebung, umfassend:
- einen Bildsensor (11) zum Aufnehmen von Videobildern von der Umgebung des Fahrzeugs,
- mindestens einen Sensor (15) zum Erfassen von Daten der Fahrzeugumgebung des Fahrzeugs, welcher die Geschwindigkeit von Fahrzeugen vor dem erfassenden Fahrzeug bestimmt,
- eine Sensorverarbeitungseinheit (16) zum Verarbeiten der Sensordaten,
- eine Bildverarbeitungseinheit (13) für eine Nachbearbeitung der Videobilder und für ein Erkennen von Fahrzeugen in den Videobildern, und
- eine Graphikverarbeitungseinheit (17) für ein Veranschaulichen der verarbeiteten Sensordaten in den angezeigten Videobildern, indem die Darstellung der erfassten Fahrzeuge in den angezeigten Videobildern geändert wird, wobei die Darstellung eines Fahrzeugs vor dem erfassenden Fahrzeug geändert wird, indem einem Fahrzeug, dessen absolute Geschwindigkeit geringer als eine vorbestimmte Schwellenwertgeschwindigkeit ist, blinkende Warnlichter hinzugefügt werden.

12. System nach Anspruch 10 oder 11, wobei der Sensor (15), welcher Daten der Fahrzeugumgebung erfasst, mindestens einen der folgenden Sensoren umfasst: einen Entfernungssensor, einen Sensor, welcher die Geschwindigkeit von vor dem Fahrzeug fahrenden Fahrzeugen erfasst, einen Temperatursensor, einen Feuchtigkeitspegelerfassungssensor, einen Positionserfassungssensor.

13. System nach einem der Ansprüche 10-12, wobei die Bildverarbeitungseinheit (13) ausgestaltet ist, Fahrzeuge in den Videobildern zu erkennen, indem Kantenerfassungsfilter auf die Videobilder angewendet werden und die erfassten Objekte mit vorbestimmten Arten von in einer Datenbasis (14) gespeicherten Objekten verglichen werden.

## Revendications

1. Procédé de présentation d'images vidéo d'un voisinage de véhicule, comprenant les étapes suivantes:
- prise d'images vidéo du voisinage du véhicule (22),
- reconnaissance d'objets dans les images vidéo (23), l'étape de reconnaissance d'objets comprenant l'étape de reconnaissance de véhicules dans les images vidéo,
- détection de données de capteur (24) du voisinage du véhicule, comprenant l'étape de détermination de la vitesse de véhicules roulant devant le véhicule détectant,
- traitement des données de capteur (25),
- visualisation des données de capteur traitées dans les images vidéo (26) affichées par modification de la représentation d'objets reconnus dans les images vidéo affichées, les feux de stop du véhicule roulant devant étant montrés dans un état activé lorsqu'on détecte que la vitesse du véhicule se déplaçant devant le véhicule détectant est une vitesse par rapport au véhicule détectant qui est inférieure à une vitesse de seuil déterminée.

2. Procédé de présentation d'images vidéo d'un voisinage de véhicule comprenant les étapes suivantes:
- prise d'images vidéo du voisinage du véhicule (22),
- reconnaissance d'objets dans les images vidéo (23), l'étape de reconnaissance d'objets comprenant l'étape de reconnaissance de véhicules dans les images vidéo,
- détection de données de capteur (24) du voisinage du véhicule, comprenant l'étape de détermination de la vitesse de véhicules roulant devant le véhicule détectant,
- traitement des données de capteur (25),
- visualisation des données de capteur traitées dans les images vidéo (26) affichées par modification de la représentation d'objets reconnus dans les images vidéo affichées, la représentation d'un véhicule roulant devant le véhicule détectant étant modifiée par l'addition de témoins clignotants à un véhicule pour lequel la vitesse absolue est inférieure à une vitesse de seuil prédéterminée.

3. Procédé selon la revendication 1 ou 2, **caractérisé en ce que** des objets présents dans les images vidéo et également visibles pour le conducteur à travers le pare-brise sont détectés et interprétés par post-traitement des images vidéo et sont classés dans des classes d'objets.

4. Procédé selon l'une des revendications précédentes, **caractérisé en ce que** la représentation des objets reconnus est modifiée par introduction d'un élément dans un objet dans les images vidéo affichées qui n'est actuellement pas présent dans les images vidéo, mais qui pourrait se trouver dans les images vidéo dans une autre situation de conduite.

5. Procédé selon l'une des revendications précédentes, dans lequel les images vidéo sont prises du voisinage du véhicule devant le véhicule.

6. Procédé selon l'une des revendications précédentes, dans lequel l'étape de détection de données de capteur comprend l'étape de détection de la température extérieure et du degré d'humidité extérieure, dans lequel, lorsque la température extérieure est inférieure à une température de seuil prédéterminée, et lorsque l'humidité est supérieure à une humidité de seuil prédéterminée, la représentation de la route dans les images vidéo est modifiée de sorte que le danger éventuel soit reconnu par le conducteur, en modifiant la représentation de la route par l'addition de réflexions comme sur du verglas.

7. Procédé selon l'une des revendications précédentes, dans lequel l'étape de détection de données de capteur comprend l'étape de détermination de la visibilité extérieure, et lorsque la visibilité est inférieure à une visibilité de seuil prédéterminée, et lorsque la distance par rapport au véhicule roulant devant est plus grande qu'une distance prédéterminée, la représentation du véhicule roulant devant le véhicule détectant est modifiée de sorte qu'il soit mieux visible dans les images qu'en réalité, en augmentant les images vidéo par une image du véhicule dans sa position actuelle.

8. Procédé selon la revendication 1, dans lequel la représentation d'un véhicule roulant devant le véhicule détectant est modifiée par l'addition de témoins clignotants à un véhicule pour lequel la vitesse absolue est inférieure à une vitesse de seuil prédéterminée.

9. Procédé selon l'une des revendications précédentes, dans lequel l'étape de détection de données de capteur du véhicule comprend l'étape de déterminer la position du véhicule et de localiser le véhicule dans une carte numérique et d'accentuer des objets dans les images vidéo en fonction d'une information provenant des données de carte, l'information d'objet étant récupérée des données de carte, et d'accentuer des objets dans les images vidéo en fonction des données de capteur reçues.

10. Système d'affichage d'images vidéo en provenance d'un voisinage de véhicule, comprenant:
- un capteur d'image (11) pour prendre des images vidéo du voisinage du véhicule,
- au moins un capteur (15) pour détecter des données du voisinage du véhicule déterminant la vitesse de véhicules roulant devant le véhicule détectant,
- une unité de traitement de capteur (16) pour traiter les données de capteur,
- une unité de traitement d'image (13) pour post-traiter les images vidéo et pour reconnaître des véhicules dans les images vidéo, et
- une unité de traitement de graphiques (17) pour visualiser les données de capteur traitées dans les images vidéo affichées par modification de la représentation des véhicules détectés dans les images vidéo affichées, les témoins de frein du véhicule roulant devant étant montrés dans un état activé lorsqu'on détecte que la vitesse du véhicule se déplaçant devant le véhicule détectant est une vitesse par rapport au véhicule détectant qui est inférieure à une vitesse de seuil prédéterminée.

11. Système d'affichage d'images vidéo en provenance d'un voisinage de véhicule, comprenant:
- un capteur d'images (11) pour prendre des images vidéo du voisinage du véhicule,
- au moins un capteur (15) pour détecter des données du voisinage du véhicule déterminant la vitesse de véhicules roulant devant le véhicule détectant,
- une unité de traitement de capteur (16) pour traiter les données de capteur,
- une unité de traitement d'image (13) pour post-traiter les images vidéo et pour reconnaître des véhicules dans les images vidéo, et
- une unité de traitement de graphiques (17) pour visualiser les données de capteur traitées dans les images vidéo affichées par modification de la représentation des véhicules détectés dans les images vidéo affichées, la représentation d'un véhicule roulant devant le véhicule détectant étant modifiée par l'addition de témoins clignotants à un véhicule pour lequel la vitesse absolue est inférieure à une vitesse de seuil prédéterminée.

12. Système selon la revendication 10 ou 11, dans lequel le capteur (15) détectant des données du voisinage du véhicule comprend au moins l'un des capteurs suivants: un capteur de distance, un capteur détectant la vitesse de véhicules roulant devant le véhicule, un capteur de température, un capteur de détection de degré d'humidité, un capteur de détection de position.

13. Système selon l'une des revendications 10 à 12, dans lequel l'unité de traitement d'images (13) est adaptée pour reconnaître des véhicules dans les images vidéo par application de filtres de détection d'angle aux images vidéo et par comparaison des objets détectés à des types prédéterminés d'objets mémorisés dans un banc de données (14).
